# EUROPÄISCHE PATENTSCHRIFT

(11) **EP 1 719 238 B1**
(45) Veröffentlichungstag und Bekanntmachung des Hinweises auf die Patenterteilung: **21.09.2011**
(21) Anmeldenummer: 05707806.5
(22) Anmeldetag: 20.01.2005
(51) Int. Cl.: H02K 7/116, H02K 15/14

(54) **ELEKTRISCHE ANTRIEBSEINHEIT**
ELECTRIC DRIVE UNIT
UNITE D'ENTRAINEMENT ELECTRIQUE

(30) Priorität: 17.02.2004 DE 102004007873; 19.05.2004 DE 102004024702
(43) Veröffentlichungstag der Anmeldung: 08.11.2006
(73) Patentinhaber: ROBERT BOSCH GMBH, 70442 Stuttgart (DE)
(72) Erfinder: OBERLE, Hans-Juergen, 76437 Rastatt (DE); SCHWENDEMANN, Franz, 77833 Ottersweier (DE); SCHMIDT, Willi, 76297 Stutensee-Buechig (DE)
(86) Internationale Anmeldenummer: PCT/EP2005/050230
(87) Internationale Veröffentlichungsnummer: WO 2005/081383

(56) Entgegenhaltungen:
- EP-A- 0 998 013
- DE-A1- 10 108 192
- DE-A1- 19 738 396
- US-A- 4 987 791

## Beschreibung

### Stand der Technik

Die Erfindung geht aus von einer elektrischen Antriebseinheit nach dem Oberbegriff des Patentanspruchs 1.

Eine derartige elektrische Antriebseinheit weist mindestens einen Elektromotor auf, dessen Polgehäuse an wenigstens einer Abtriebsseite des Elektromotors mit einem Deckel verschlossen ist. Der Deckel ist mit einem Befestigungsbereich in dem Polgehäuse befestigt Das Polgehäuse ragt mit mindestens einem Abschnitt wenigstens teilweise mindestens an der Abtriebsseite axial über den Befestigungsbereich des Deckels hinaus. Dies kann beispielsweise durch einen Bereich erfolgen, der der Verstemmung des Deckels mit dem Polgehäuse dient In dieser Ausgestaltung besteht die Antriebseinheit nur aus dem Elektromotor, der - beispielsweise mit einem Abtriebsritzel - versehen, in eine Vorrichtung eingebaut wird. Soll die Antriebseinheit mit einem Getriebe, beispielsweise einem Schneckengetriebe, versehen werden, so wird der Deckel durch das Getriebegehäuse ersetzt. Ebenso wie der Deckel wird auch das Getriebegehäuse verstemmt. Die mechanische Schnittstelle zum Kunden wird über das Getriebegehäuse, z. B. über Anschraubbohrungen, realisiert. Für die Lagerhaltung bedeutet dies, dass unterschiedliche Elektromotorentypen vorgesehen werden müssen.

Mit der DE-A-19738396 ist ein Elektromotor bekannt geworden, bei dem das Motorgehäuse ein Lagerschild fest verspannt und das Lagerschild axial überragt um mit einem Getriebegehäuse verbunden zu werden.

### Vorteile der Erfindung

Die erfindungsgemäße elektrische Antriebseinheit mit den Merkmalen des Anspruchs 1 hat demgegenüber den Vorteil, dass das Polgehäuse eine größere Funktionalität erhält Es ist ein einheitliches Polgehäuse mit Deckel für Antriebseinheiten, die nur aus dem Elektromotor bestehen und Antriebseinheiten, die aus Elektromotor und Getriebe bestehen, möglich. Neben der Positionierung, Zentrierung und Befestigung des Deckels kann gleichzeitig das Getriebegehäuse positioniert, zentriert und befestigt werden, wobei die Funktionen Zentrierung und Positionierung wahlweise vom Polgehäuse oder Deckel erbracht werden können. Die Prüfung des elektrischen Teils ist ohne Getriebe möglich und somit eine frühe Fehlerentdeckung im Ferfigungsprozess. Hierzu weist die elektrische Antriebseinheit mindestens einen Elektromotor auf, dessen Polgehäuse an wenigstens einer Abtriebsseite des Elektromotors mit einem Deckel verschlossen ist, wobei der Deckel mit einem Befestigungsbereich in dem Polgehäuse befestigt ist und das Polgehäuse mit mindestens einem Abschnitt wenigstens teilweise mindestens an der Abtriebsseite axial über den Befestigungsbereich des Deckels hinausragt, wobei der wenigstens eine Abschnitt des Polgehäuses mindestens einen Bereich aufweist, der zur zusätzlichen Befestigung eines Getriebes ausgebildet ist. Das Getriebe liegt über einen Flansch des Getriebes am Deckel an, der von den Bereichen des Polgehäuses hintergriffen ist, so ist eine sichere formschlüssige Verbindung gewährleistet.

Das Befestigen wird aus Festigkeitsgründen vorzugsweise vom Bauteil mit dem größten Durchmesser (Polgehäuse) erbracht, was jedoch nicht zwingend notwendig ist. Außerdem sind keine zusätzlichen Befestigungselemente für das Getriebegehäuse notwendig. Hierzu können mehrere Bereiche zur Verstemmung des Elektromotors mit dem zusätzlichen Getriebe ausgebildet sein. Außerdem ist der Elektromotor vorzugsweise über mehrere Bereiche mit dem Getriebe verstemmt.

Erleichtert wird das Herstellen von Stellen zum Verstemmen, wenn an der Abtriebsseite des Elektromotors am Umfang des Polgehäuses wenigstens eine Ausnehmung ausgebildet ist, so dass ein Verstemmen des Bereichs erleichtert wird. Vorzugsweise erfolgt dies so, dass sich parallel zur Abtriebseite des Elektromotors am Umfang des Polgehäuses wenigstens ein Langloch erstreckt.

Der Abschnitt lässt sich besonders einfach herstellen, wenn das Polgehäuse rohrförmig ausgebildet ist. Eine weitere Erleichterung bei der Herstellung ist den Deckel in das Polgehäuses einzurollieren.

Wahlweise erfolgt die Zentrierung des Elektromotors und des Getriebes durch den Deckel und die Positionierung des Elektromotors und des Getriebes durch das Polgehäuse oder die Zentrierung des Elektromotors und des Getriebes durch das Polgehäuse und die Positionierung des Elektromotors und des Getriebes durch den Deckel.

Eine sichere formschlüssige Verbindung wird besonders dadurch unterstützt, dass der Flansch zumindest teilweise im Polgehäuse angeordnet ist. Vorzugsweise ist der Deckel ein Lagerschild, da hierdurch das Verschließen des Polgehäuses und die Lagerung der Welle in einem Bauteil vereint werden.

Weitere Vorteile und vorteilhafte Weiterbildungen ergeben sich aus den Unteransprüchen und der Beschreibung.

### Zeichnung

Ein Ausführungsbeispiel ist in der Zeichnung dargestellt und in der nachfolgenden Beschreibung näher erläutert. Es zeigen:
Figur 1 eine Antriebseinheit in einem Längsschnitt,
Figur 2 eine Stirnansicht nach Figur 1 und
Figur 3 einen Ausschnitt aus einer Draufsicht nach Figur 1.

### Beschreibung des Ausführungsbeispiels

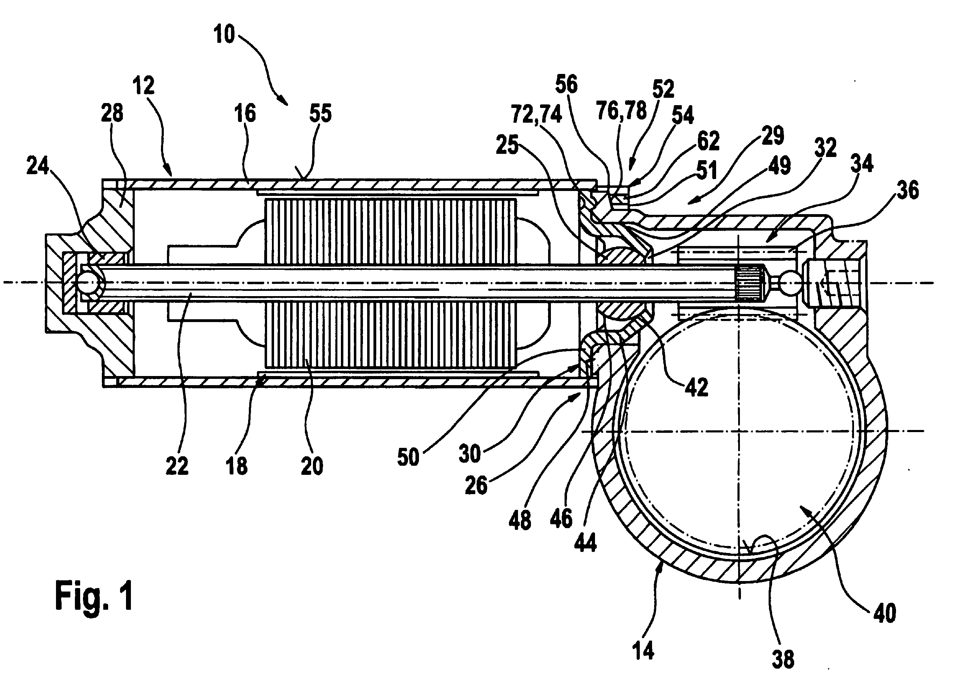

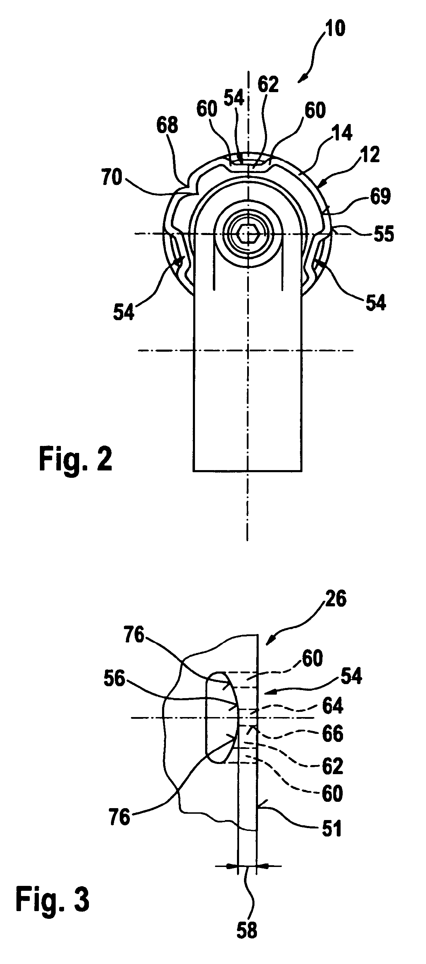

In den Figuren 1 und 2 ist eine elektrische Antriebseinheit 10 gezeigt, die bevorzugt Verwendung in Kraftfahrzeugen findet. Bei der Antriebseinheit 10 kann es sich um einen Sitzversteller, Fensterheber, Schiebedachantrieb, Triebstrangsteller, insbesondere Kupplungssteller oder dergleichen handeln.

Jedoch ist die Verwendung bei einem Sitzversteller besonders zweckmäßig. Die Antriebseinheit 10 umfasst als wesentliche Bauteile einen Elektromotor 12 und ein Getriebe 14. Die Anordnung aus Elektromotor 12 und Getriebe 14 kann auch als Getriebemotor bezeichnet werden. Der Elektromotor 12 umfasst in einem Polgehäuse 16 einen Stator 18 und einen Rotor 20. Die Welle 22 des Rotors 20 ist radial in mindestens zwei Lagern 24, 25 gelagert.

Das Polgehäuse 16 des Elektromotors 12 ist rohrförmig, beispielsweise zylindrisch, ausgebildet. Es kann aber auch topfförmig ausgebildet sein. An einer Stirnseite 26 des Polgehäuses 16 ist der Elektromotor 12 mit einem das Lager 24 aufnehmenden Lagerschild 28 versehen. An der anderen Stirnseite, welche die Abtriebsseite 29 ist, ist ebenfalls ein das andere Lager 25 aufnehmendes Lagerschild 30 angeordnet. Das Lagerschild 30, das auch als Deckel bezeichnet werden kann, ist mit einem Durchbruch 32 für die Welle 22 versehen. Das Lagerschild 30 wird beispielsweise als ein Blechstanzteil hergestellt Auf das Lagerschild 30 wird gleich noch näher eingegangen.

Mit dem durch den Durchbruch 32 reichenden Ende 34 ragt die Welle 22 in den Innenraum 38 des Getriebes 14. An dem Ende 34 der Welle 22 ist die Schnecke 36 eines Schneckengetriebes 40 befestigt, das im Innenraum 38 des Getriebes 14 angeordnet ist. Das Schneckengetriebe 40 ist somit an der Abtriebsseite 28 des Elektromotors 12 angeordnet. Statt des Schneckengetriebes 30 kann auch ein anderes Getriebe am Elektromotor 12 angeordnet sein.

An den Durchbruch 32 des Lageschilds 30 schließt sich ein Aufnahmeabschnitt 42 mit V-förmiger Querschnittsfläche für das Lager 25 an, das im vorliegenden Fall als Kalottenlager ausgebildet ist. An den Aufnahmeabschnitt 42 schließt sich ein zylinderförmiger Abschnitt 44 an. Zum einen ist im Abschnitt 44 eine Spannscheibe 46 oder Klemmbrille für das Lager 25 angeordnet. Zum andern dient der Abschnitt 44 der Zentrierung des Getriebes 40, das mit einem Flansch 48 auf den Abschnitt 44 gesteckt ist. Hierzu ist eine entsprechende Ausnehmung bzw. Bohrung 49 im Flansch 48 vorgesehen.

An den Abschnitt 44 schließt sich ein scheibenförmiger Befestigungsbereich 50 des Lagerschilds 30 an. Der Flansch 48 liegt am Befestigungsbereich 50 an und ist im vorliegenden Ausführungsbeispiel zumindest teilweise im Polgehäuse 16 angeordnet. Mit dem Befestigungsbereich 50 ist das Lagerschild 30 an der Abtriebsseite 29 des Elektromotors 12 mit Abstand vom äußeren Rand 51 der Abtriebsseite 29 befestigt. Vorzugsweise ist der Befestigungsbereich 50 in das Polgehäuse 16 einrolliert, da sich das Lagerschild dadurch leicht befestigen lässt. Ein Teil des Aufnahmeabschnitts 42 ragt noch über den Rand 51 des Polgehäuses 16 hinaus.

Das Polgehäuse 16 ragt aber mit mindestens einem Abschnitt 52 wenigstens an der Abtriebsseite 29 axial über den Befestigungsbereich 50 des Lagerschilds 30 hinaus. Im vorliegenden Ausführungsbeispiel ist der Abschnitt 52 rohr- oder hülsenförmig ausgebildet. Es ist aber auch möglich, statt des rohrförmigen Abschnitts 52 eine oder mehrere als Zungen ausgebildete Abschnitte vorzusehen, die ebenfalls axial über den Befestigungsbereich 50 hinausragen.

Am Abschnitt 52 des Polgehäuses 16 sind radial nach innen verstemmte Bereiche 54 vorgesehen. Wie aus der Figur 2 hervorgeht sind drei Bereiche 54 vorgesehen, die am Umfang 55 des Polgehäuses 16 um ca. 120° versetzt angeordnet sind. Es würde schon ein Bereich 54 genügen, wobei zwei Bereiche 54 einen besseren Halt gewähren würden. Auch könnten mehr Bereiche 54, beispielsweise vier, fünf, sechs etc., vorgesehen sein. Drei Bereiche 54 haben sich jedoch als am sinnvollsten hinsichtlich Anzahl und Festigkeit erwiesen. Die Bereiche 54 dienen der Befestigung des Getriebes 14. Durch die Bereiche 54 ist das Getriebe 14 mit dem Elektromotor 12 vorzugsweise verstemmt.

Wie aus der Figur 3 hervorgeht, sind an der Abtriebsseite 29 des Elektromotors 12 die Bereiche 54 dadurch gebildet, dass am Umfang 55 des Polgehäuses 16 wenigstens eine Ausnehmung 56, vorzugsweise in Form eines Langlochs, das sich parallel zum Rand 51 erstreckt, ausgebildet ist. Der Abstand 58 zum Rand 51 beträgt beispielsweise einige Millimeter. Die Ausnehmung 56 in Form des Langlochs erstreckt sich am Umfang 55 beispielsweise über 10°. Ausgehend vom Umfang 51 hat ein Bereich 54 zwei sich radial nach innen erstreckende Abschnitte 60, die über einen ebenfalls durch die Ausnehmung 56 gebildeten Steg 62 miteinander verbunden sind. Der Steg 62 ist bogenförmig ausgebildet. Es ist aber auch möglich, dass kein Steg 62 vorgesehen ist und die Abschnitte 60 durch einen Schlitz 64 voneinander getrennt sind. Dies ist durch die gestrichelten Linien 66 in Figur 3 verdeutlicht. Das hat den Vorteil, dass die zum Verstemmen erforderlichen Kräfte geringer sind. Auch ist es möglich, dass kein Steg 62 vorgesehen ist und die Abschnitte 60 in der Seitenansicht der Figur 2 die Form eines Keils bilden. Auch ist es denkbar, keine Ausnehmung 56 vorzusehen, sondern nur den Schlitz 64. In beiden Fällen wird das Verstemmen des Bereichs beziehungsweise der Bereiche 54 erleichtert.

Ein weiterer Aspekt ist in der Figur 2 verdeutlicht. Neben der bereits beschriebenen Zentrierung ist es sinnvoll, eine - in Umfangsrichtung gesehene - Positionierung zwischen Elektromotor 12 und Getriebe 14 zueinander vorzusehen. Hierzu wird am Umfang 55 des Polgehäuses 16 eine radial nach innen gerichtete Sicke 68 ausgebildet. Am Umfang 69 des Flansches 48 des Getriebes 14 ist eine korrespondierende Kerbe 70 ausgebildet. Alternativ ist es auch möglich, dass zur Zentrierung nicht der Abschnitt 44 und die Bohrung 49 verwendet werden. Wie aus den Figuren 1 und 2 hervorgeht, kann hierzu auch der Außenumfang des Flansches 48 und der Innenumfang des Polgehäuses 16 verwendet werden. Auch ist eine Zentrierung über das Lagerschild 30 möglich. Hierzu ist in der Figur 1 eine Warze 72 gezeigt, die in eine korrespondierende Vertiefung 74 im Flansch 48 angeordnet ist.

Zusammenfassend lässt sich sagen, dass die Zentrierung und die Positionierung des Deckels 30 und des Getriebes 14 durch das Polgehäuse 16 erfolgt oder dass die Zentrierung und die Positionierung des Deckels 30 durch das Polgehäuse 16 erfolgt und die Zentrierung und die Positionierung des Getriebes 14 durch den Deckel 30. Die einfachste Lösung ist jedoch die Zentrierung, Positionierung und Befestigung des Deckels 30 und des Getriebes 14 durch das Polgehäuse, da somit alle drei Funktionen durch ein Bauteil erfolgen.

Bei der Herstellung werden unabhängig von der Verwendung des Elektromotors 12 mit oder ohne Getriebe 14 die Bereiche 54 im Polgehäuse 16 ausgebildet. Das Polgehäuse 16 wird beispielsweise aus einem Blech gestanzt. Hierbei werden auch die Ausnehmungen 56 und/oder Schlitze 64 ausgestanzt. Dann wird das Polgehäuse 16 gerollt.

Soll der Elektromotor 12 ohne Getriebe 14 ausgeliefert werden, so erfolgt keine weitere Bearbeitung der Bereiche 54. Das heißt, die Bereiche 54 werden im Polgehäuse 16 ausgebildet, wobei sie nicht, so wie in der Figur 2 dargestellt, nach innen verstemmt werden. Allerdings ist eine derartige Verstemmung auch denkbar.

Sollen der Elektromotor 12 und das Getriebe 14 montiert werden, werden beide so ausgerichtet, dass die Sicke 68 und die Kerbe 70 in Überdeckung gebracht werden. Alternativ werden die Warze 72 und die Vertiefung 74 in Überdeckung gebracht. Die Sicke 68 und die Kerbe 70 haben jedoch den Vorteil, dass eine positionsgerechte Montage nur möglich ist, wenn der Elektromotor 12 und das Getriebe 14 auch wirklich korrekt ausgerichtet sind. Als weiterer Schritt wird das Getriebe 14 über seinen Flansch 48 am Lagerschild 30 zur Anlage gebracht. Die Bereiche 54 werden nach innen verstemmt, bis sie den Flansch 48 hintergreifen beziehungsweise umgreifen und an das Lagerschild 30 pressen. In der Figur 1 sind hierzu am Flansch 48 und an den Bereichen 54 schräge Flächen 76 beziehungsweise 78 ausgebildet.

Die schrägen Flächen 76 an den Bereichen 54 beziehungsweise den Abschnitten 60 sind in der Figur 3 besonders gut erkennbar. Die Ausnehmung 56 verbreitert sich im Zentrum durch die sich verjüngenden, aufeinander zulaufenden Abschnitte 60 zum Rand 51 des Polgehäuses hin.

Da die Bereiche 54 auf jeden Fall ausgebildet werden, ist eine baukastengerechte Möglichkeit geschaffen, den gleichen Elektromotor 12 mit oder ohne Getriebe 14 zu verwenden bzw. an einen Kunden zu liefern. Dies vereinfacht die Lagerhaltung und bringt Stückzahlvorleile. Bei der Verwendung als Getriebemotor kann über die Bereiche 54 jederzeit zusätzlich das Getriebe 14 befestigt werden.

## Patentansprüche

1. Elektrische Antriebseinheit (10) mit mindestens einem Elektromotor (12), dessen Polgehäuse (16) an wenigstens einer Abtriebsseite (29) des Elektromotors (12) mit einem vorzugsweise als Lagerschild ausgebildeten Deckel (30) verschlossen ist, wobei der Deckel (30) mit einem Befestigungsbereich (50) in dem Polgehäuse (16) befestigt ist und das Polgehäuse (16) mit mindestens einem Abschnitt (52) wenigstens teilweise axial über den Befestigungsbereich (50) des Deckels (30) hinausragt, wobei der wenigstens eine Abschnitt (52) des Polgehäuses (16) mindestens einen Bereich (54) aufweist, der zur zusätzlichen Befestigung eines Getriebes (14) ausgebildet ist, **dadurch gekennzeichnet, dass** das Getriebe (14) über einen Flansch (48) des Getriebes (14) am Deckel (30) anliegt, wobei der Flansch von den Bereichen (54) des Polgehäuses (16) hintergriffen ist.

2. Elektrische Antriebseinheit (10) nach Anspruch 1, **dadurch gekennzeichnet, dass** mehrere Bereiche (54) zur Verstemmung des Elektromotors (12) mit einem Getriebe (14) ausgebildet sind.

3. Elektrische Antriebseinheit (10) nach Anspruch 1 oder 2, **dadurch gekennzeichnet, dass** an der Abtriebsseite (29) des Elektromotors (12) am Umfang des Polgehäuses (16) wenigstens eine Ausnehmung (54, 64) ausgebildet ist, so dass ein Verstemmen des Bereichs (54) erleichtert wird.

4. Elektrische Antriebseinheit (10) nach einem der vorhergehenden Ansprüche, **dadurch gekennzeichnet, dass** sich parallel zum Rand (51) des Polgehäuses (16) an der Abtriebseite (29) des Elektromotors (12) am Umfang (55) des Polgehäuses (16) wenigstens ein Langloch (56) erstreckt, so dass ein Verstemmen des Bereichs (54) erleichtert wird.

5. Elektrische Antriebseinheit (10) nach einem der vorhergehenden Ansprüche, **dadurch gekennzeichnet, dass** der Elektromotor (12) über die mehreren Bereiche (54) mit dem Getriebe (14) verstemmt ist.

6. Elektrische Antriebseinheit (10) nach einem der vorhergehenden Ansprüche, **dadurch gekennzeichnet, dass** der wenigstens eine Abschnitt (52) des Polgehäuses (16) rohrförmig ausgebildet ist.

7. Elektrische Antriebseinheit (10) nach einem der vorhergehenden Ansprüche, **dadurch gekennzeichnet, dass** der Deckel (30) in das Polgehäuses (16) einrolliert ist.

8. Elektrische Antriebseinheit (10) nach einem der vorhergehenden Ansprüche, **dadurch gekennzeichnet, dass** die Zentrierung und die Positionierung des Deckels (30) und des Getriebes (14) durch das Polgehäuse (16) erfolgt oder dass die Zentrierung und die Positionierung des Deckels (30) durch das Polgehäuse (16) erfolgt und die Zentrierung und die Positionierung des Getriebes (14) durch den Deckel (30).

9. Elektrische Antriebseinheit (10) nach einem der vorhergehenden Ansprüche, **dadurch gekennzeichnet, dass** die Bereiche (54) nach innen verstemmt sind, bis sie den Flansch (48) hintergreifen beziehungsweise umgreifen und an das Lagerschild (30) pressen.

10. Elektrische Antriebseinheit (10) nach Anspruch 1, **dadurch gekennzeichnet, dass** der Flansch (48) des Getriebes (14) zumindest teilweise im Polgehäuse (16) angeordnet Ist.

## Claims

1. Electric drive unit (10) having at least one electric motor (12), the pole housing (16) of the said electric motor being closed at at least an output end (29) of the electric motor (12) by a cover (30) which is preferably in the form of an end plate, with the cover (30) being mounted in the pole housing (16) by way of a mounting region (50) and the pole housing (16) projecting at least partially axially beyond the mounting region (50) of the cover (30) by way of at least one section (52), with the at least one section (52) of the pole housing (16) having at least one region (54) which is designed to additionally mount a gear mechanism (14), **characterized in that** the gear mechanism (14) bears against the cover (30) by means of a flange (48) of the gear mechanism (14), with the regions (54) of the pole housing (16) engaging behind the flange.

2. Electric drive unit (10) according to Claim 1, **characterized in that** a plurality of regions (54) for caulking the electric motor (12) to a gear mechanism (14) are provided.

3. Electric drive unit (10) according to Claim 1 or 2, **characterized in that** at least one recess (54, 56) is formed in the periphery of the pole housing (16) at the output end (29) of the electric motor (12), so that caulking of the region (54) is made easier.

4. Electric drive unit (10) according to one of the preceding claims, **characterized in that** at least one elongate hole (56) extends in the periphery (55) of the pole housing (16) parallel to the edge (51) of the pole housing (16) at the output end (29) of the electric motor (12), so that caulking of the region (54) is made easier.

5. Electric drive unit (10) according to one of the preceding claims, **characterized in that** the electric motor (12) is caulked to the gear mechanism (14) by means of the plurality of regions (54).

6. Electric drive unit (10) according to one of the preceding claims, **characterized in that** the at least one section (52) of the pole housing (16) is of tubular design.

7. Electric drive unit (10) according to one of the preceding claims, **characterized in that** the cover (30) is rolled into the pole housing (16).

8. Electric drive unit (10) according to one of the preceding claims, **characterized in that** the cover (30) and the gear mechanism (14) are centred and positioned by the pole housing (16), or **in that** the cover (30) is centred and positioned by the pole housing (16) and the gear mechanism (14) is centred and positioned by the cover (30).

9. Electric drive unit (10) according to one of the preceding claims, **characterized in that** the regions (54) are caulked inwards until they engage behind or surround the flange (48) and press against the end plate (30).

10. Electric drive unit (10) according to Claim 1, **characterized in that** the flange (48) of the gear mechanism (14) is arranged at least partially in the pole housing (16).

## Revendications

1. Unité d'entraînement électrique (10) équipée d'au moins un moteur électrique (12), dont le boîtier polaire (16) est fermé au niveau d'au moins un côté d'entraînement en sortie (29) du moteur électrique (12) au moyen d'un couvercle (30) de préférence réalisé sous la forme d'un panneau de soutien, le couvercle (30) étant fixé dans le boîtier polaire (16) à l'aide d'une zone de fixation (50) et le boîtier polaire (16) saillant, avec au moins une section (52), au moins en partie dans le plan axial au-delà de la zone de fixation (50) du couvercle (30), l'au moins une section (52) du boîtier polaire (16) comportant au moins une zone (54) conçue pour réaliser une fixation supplémentaire d'un engrenage (14), **caractérisée en ce que** l'engrenage (14) repose contre le couvercle (30) par le biais d'un flanc (48) de l'engrenage (14), le flanc étant engrené par l'arrière par les zones (54) du boîtier polaire (16).

2. Unité d'entraînement électrique (10) selon la revendication 1, **caractérisée en ce que** plusieurs zones (54) sont dotées d'un engrenage (14) pour réaliser le matage du moteur électrique (12).

3. Unité d'entraînement électrique (10) selon la revendication 1 ou 2, **caractérisée en ce qu'**au moins un évidement (54, 64) est réalisé au niveau du côté d'entraînement en sortie (29) du moteur électrique (12), au niveau de la périphérie du boîtier polaire (16), de façon à simplifier un matage de la zone (54).

4. Unité d'entraînement électrique (10) selon l'une quelconque des revendications précédentes, **caractérisée en ce qu'**au moins un trou oblong (56) s'étend parallèlement au bord (51) du boîtier polaire (16), au niveau du côté d'entraînement en sortie (29) du moteur électrique (12), au niveau de la périphérie (55) du boîtier polaire (16), de façon à simplifier un matage de la zone (54).

5. Unité d'entraînement électrique (10) selon l'une quelconque des revendications précédentes, **caractérisée en ce que** le moteur électrique (12) est maté à l'engrenage (14) par l'intermédiaire de plusieurs zones (54).

6. Unité d'entraînement électrique (10) selon l'une quelconque des revendications précédentes, **caractérisée en ce que** l'au moins une section (52) du boîtier polaire (16) est réalisée en forme de tube.

7. Unité d'entraînement électrique (10) selon l'une quelconque des revendications précédentes, **caractérisée en ce que** le couvercle (30) est enroulé dans le boîtier polaire (16).

8. Unité d'entraînement électrique (10) selon l'une quelconque des revendications précédentes, **caractérisée en ce que** le centrage et le positionnement du couvercle (30) et de l'engrenage (14) se produit du fait du boîtier polaire (16) et que le centrage et le positionnement du couvercle (30) se produit du fait du boîtier polaire (16) et que le centrage et le positionnement de l'engrenage (14) se produit du fait du couvercle (30).

9. Unité d'entraînement électrique (10) selon l'une quelconque des revendications précédentes, **caractérisée en ce que** les zones (54) sont matées vers l'intérieur jusqu'à engrener par derrière et/ou engrener de façon enveloppante le flanc (48) et appuyer contre le panneau de soutien (30).

10. Unité d'entraînement électrique (10) selon la revendication 1, **caractérisée en ce que** le flanc (48) de l'engrenage (14) est disposé au moins en partie dans le boîtier polaire (16).
